# EUROPÄISCHE PATENTANMELDUNG

(11) **EP 2 290 769 A1**
(43) Veröffentlichungstag der Anmeldung: **02.03.2011**
(21) Anmeldenummer: 09169074.3
(22) Anmeldetag: 31.08.2009
(51) Int. Cl.: H02B 1/30

(54) **Installations-Verteilerdose**

(71) Anmelder: Wysa Wydler & Saner AG, 8154 Oberglatt (CH)
(72) Erfinder: Vetterli, Michael, 6300 Zug (CH)
(74) Vertreter: Irniger, Ernst

(57) **Zusammenfassung**

Eine Vorrichtung zum Anordnen und/oder Lagern von elektrischen oder elektronischen Komponenten und/oder für die Stromverteilung, weist mindestens ein gehäuseartiges Behältnis (1) mit Deckel (31) auf, mit vier weitgehendst senkrecht zueinander angeordneten Seitenwandungen (3,5) sowie einen Behältnisboden (4). Das oder die Behältnisse sind an mindestens einer Seitenwandung oder in Eckbereichen derart ausgebildet, dass mindestens zwei Behältnisse (1) aneinander steckbar und einrastbar fest miteinander verbindbar sind. Im Weiteren sind in einigen der je vier Seitenwandungen (3,5) Öffnungen (7,9) vorgesehen, derart, dass in den aneinanderstossenden Seitenwandungen von je zwei Behältnissen die Öffnungen weitgehendst deckungsgleich sind und dichtend aneinander stossen.

## Beschreibung

Die vorliegende Erfindung betrifft eine Vorrichtung zum Anordnen und/oder Lagern von elektrischen oder elektronischen Komponenten, sowie für die Stromverteilung gemäss dem Wortlaut nach Anspruch 1.

Stromführung bzw. Verteilung in feuchter und nasser Umgebung sowie im Erdreich muss einerseits absolut in trockener Atmosphäre erfolgen und zudem ist es wichtig, dass unterschiedliche Stromkreise wie Hoch- und Niedervoltstromverbindungen etc. möglichst getrennt und gut unterscheidbar sind.

Eine Vielzahl von Strom- und Gerätegruppenanordnungen sind bekannt, wo beispielsweise auf Schienen oder Steckpaneelen verschiedene elektrische Elemente und/oder Verteilerdosen angeordnet sind, welche untereinander verbindbar bzw. kombinierbar sind. Zu nennen sind Gruppen von Sicherungen, Relais, Schaltelementen, Verteilerdosen, etc. Immer aber erfolgt die Verteilung in der Regel ausserhalb der jeweiligen Elemente oder durch Steckelemente in den Seitenwandungen der Geräte bzw. Dosen. Verteiler werden beispielsweise mit Steckdosen und DIN45 Geräten wie Leitungsschutzschalter oder Fehlstromschutzschalter usw. bestückt und verdrahtet. Ein weiterer Einsatzzweck ist beispielsweise der Einsatz als Schlaufdose, welche in der Regel als Verbindungseinheit eingesetzt wird, in der mehrere Kabel und Leitungen zusammengeführt werden. Aufgabe der vorliegenden Erfindung ist eine Vorrichtung wie insbesondere einen Stromverteiler vorzuschlagen, welcher das Anordnen von Baugruppen, elektrischen Geräten, Stromverteilern in feuchter Umgebung, ermöglicht, wobei zusätzlich eine Trennung bzw. Unterscheidung verschiedener Stromkreise möglich ist.

Erfindungsgemäss wird eine Vorrichtung bzw. eine Installations-Verteilerdose gemäss dem Wortlaut nach Anspruch 1 vorgeschlagen.

Vorgeschlagen wird, dass die Vorrichtung bzw. Verteilerdose zum Anordnen und/oder Lagern von elektrischen oder elektronischen Komponenten oder Stromverteilanordnungen mindestens ein gehäuseartiges Behältnis aufweist mit Deckel, mit vier weitgehendst senkrecht zueinander angeordneten Seitenbandungen und Behältnisboden. Das oder die Behältnisse sind an mindestens je einer Seitenwandung derart ausgebildet, dass mindestens zwei Behältnisse ineinander steckbar oder einrastbar fest miteinander verbindbar sind. Dabei sind mindestens in einigen der vier Seitenwandungen Öffnungen vorgesehen, derart, dass in den aneinanderstossenden Seitenwandungen von mindestens zwei Behältnissen die Öffnungen weitgehendst deckungsgleich sind und dichtend aneinanderstossen.

Weiter vorgeschlagen wird, dass in mindestens in einer Öffnung vorzugsweise zwei aneinanderstossender bzw. aneinanderliegender Behältnisse ein Einsatzelement vorgesehen ist, welches in die Öffnung(-en) vollständig und dichtend ausfüllend einsetzbar ist, aufweisend mehrere voneinander getrennte Durchgänge, welche individuell verschliessbar sind.

Weiter sind im oder in den Behältnisböden Bereiche vorgesehen, welche eine geringere Dicke aufweisen als der übrige Boden und welche zur Bildung je einer Öffnung gegebenenfalls heraustrennbar sind.

Wiederum weiter wird vorgeschlagen, dass in den Ecken der vier Seitenwandungen Aussparungen mit Führungen vorgesehen sind, um beim Aneinanderstossen mindestens zweier Behältnisse entlang einer Seitenwandung diese mittels je einem in die Aussparung einsetzbaren oder einsteckbaren Halteelement fest miteinander zu verbinden. Um ein einfaches Montieren der Behältnisdeckel an den Seitenwandungen zu ermöglichen, sind je am Deckelrand gegen das Innere des Behältnisses ragende Montageabschnitte vorgesehen, welche leicht federnd ausgebildet sind, derart, dass der Deckel rastend oder einschnappend mit den Wandungen verbindbar bzw. auf den Behältiswandungen aufsetzbar ist.

Am Deckelrand können entgegengesetzt zu den Wandungen nach oben ragende kantenartige Abschnitte vorgesehen sein, um beispielsweise einen zusätzlichen Schutz gegen Eindringen von Feuchtigkeit zu garantieren.

Weitere bevorzugte Ausführungsvarianten der erfindungsgemässen Vorrichtung bzw. Installations-Verteilerdose sind in den abhängigen Ansprüchen charakterisiert.

Ein wichtiger Vorteil der erfindungsgemässen Vorrichtung ist, dass modular beliebig viele Gehäuse aneinander gereiht werden können, ohne den Schutzgrad von IP67 zu beeinträchtigen, sowohl als Schlaufdose oder als sog. Gummiverteiler.

Die Erfindung wird nun beispielsweise und unter Bezug auf die beigefügten Figuren näher erläutert.

Dabei zeigen:
Fig. 1 ein in seitlicher Perspektive ein oben offenes erfindungsgemässes Behältnis,
Fig. 2 das Behältnis aus Figur 1 in Obendraufsicht,
Fig. 3 in Seitenansicht einen Deckel eines erfindungsgemässen Behältnisses,
Fig. 4 eine weitere Ausführungsvariante eines Deckels,
Fig. 5 ein Einsatzelement für eine Öffnung in der Seitenwandung des erfindungsgemässen Behältnisses,
Fig. 6 eine Abdeckung zum Verschliessen einer Öffnung in der Seitenwandung,
Fig. 7 in Perspektive ein Einsetz- bzw. Trenn- oder Verstärkungselement für das Einsetzen ins Innere des Behältnisses,
Fig. 8 in Obendraufsicht resp. Querschnitt ein Halteelement zum Zusammenhalten mehrer Behältnisse,
Fig. 9 das Halterelement in Perspektive,
Fig. 10 schematisch in Perspektive vier zusammengefügte erfindungsgemässe Behältnisse
Fig. 11 die vier Behältnisse von unten gesehen,
Fig. 12 in Perspektive eine Befestigungseinheit, vorgesehen um im Behältnis angeordnet zu werden, und
Fig. 13 in Perspektive eine scharnierartige Halterung mit Endhaken zum Halten des Deckels bspw. bei MontageArbeiten.

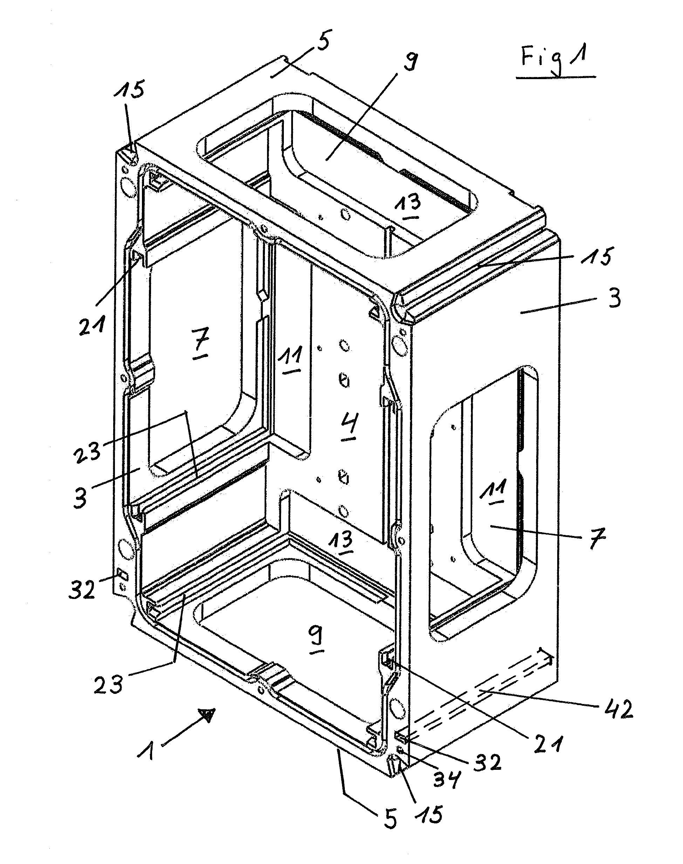

Figur 1 zeigt in Perspektive und schematisch ein oben offenes erfindungsgemässes Behältnis 1 mit zwei Längs-Seitenwandungen 3 und zwei Kopfwandungen 5. Die Längs-Seitenwandungen weisen Öffnungen 7 auf, währenddem in den kopfseitigen Wandungen Öffnungen 9 vorgesehen sind. Im Behältnisboden 4 sind vier Bereich 11 und 13 vorgesehen, welche eine reduzierte Wandstärke aufweisen und welche leicht herausgebrochen werden können zum Schaffen weiterer Öffnungen.

Im Bereich der Öffnungen der Seitenwandungen sind Einsteckkerben 21 sowie Führungen 23 vorgesehen, beispielsweise zum Einsetzen einer Abdeckung um die jeweilige Öffnung zu verschliessen. Schliesslich sind in den Eckbereichen der vier Wandungen Aussparungen 15 mit jeweiligen Führungen vorgesehen, um ein Halteelement aufzunehmen, für das feste Montieren und Zusammenhalten mehrerer Behältnisse. Auf die Funktionsweise dieser Aussparungen wird später eingegangen.

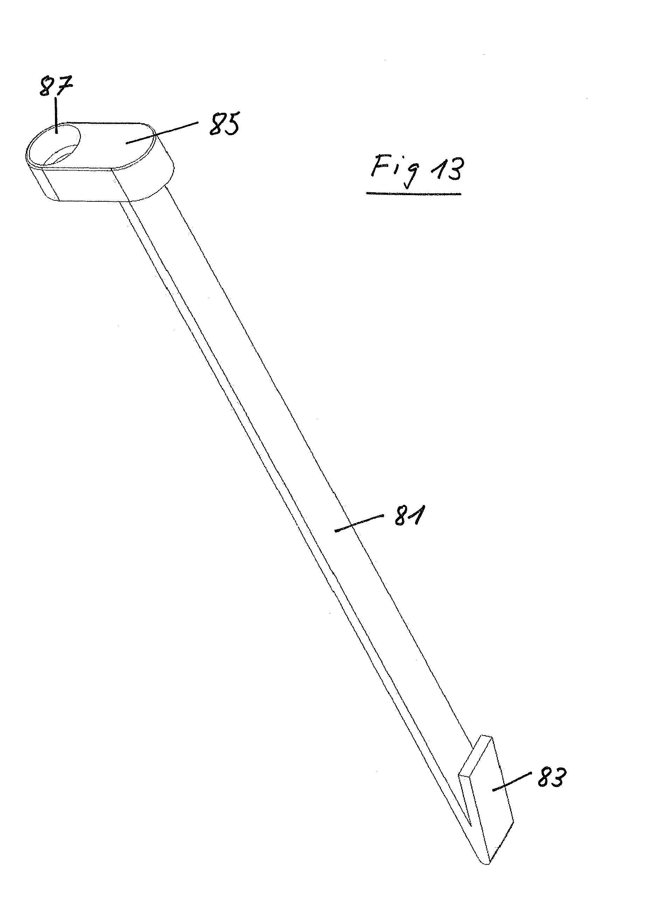

Weiter im oberen Rand des Behältnisses erkennbar, sind schlitzartige Öffnungen 32 sowie Rundlochungen 34. Die Öffnungen 32 münden in entsprechende längsverlaufende, schachtartige Aufnahmen 42 auf deren Funktion später in Bezug auf Figur 13 näher eingegangen wird. Lochungen 34 dienen für die Aufnahme von Montageorganen, wie bspw. Schrauben, um einen Deckel auf dem Behältnis zu befestigen.

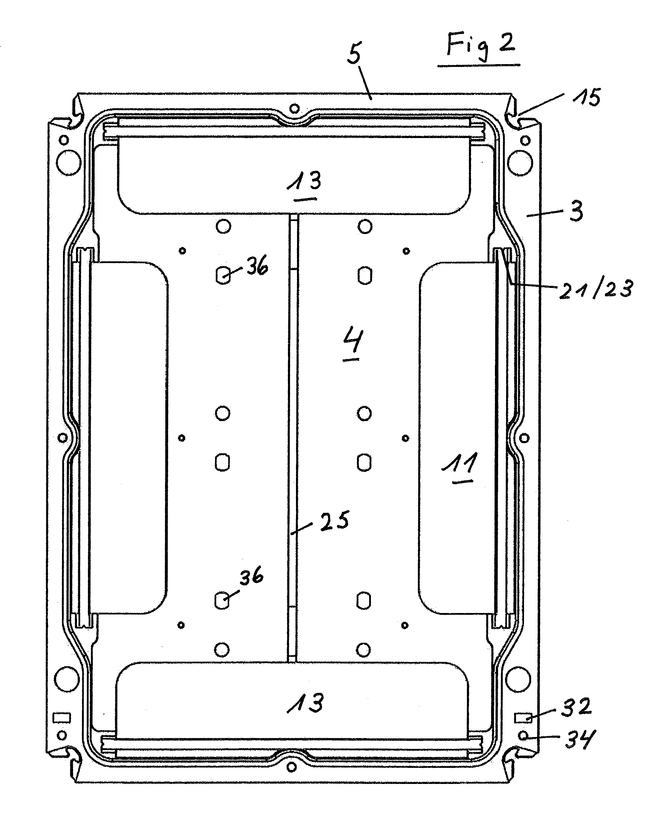

Figur 2 zeigt in Obendraufsicht das Behältnis aus Figur 1, wobei nun gut die Einführnuten und Führungen 21, 23 sowie die Bereiche mit reduzierter Wandstärke 11 und 13 im Boden 4 erkennbar sind. Ebenfalls erkennbar ist eine mittige Längsnut oder Rinne 25, welche vorgesehen ist um beispielsweise eine Trennwand einzuführen.

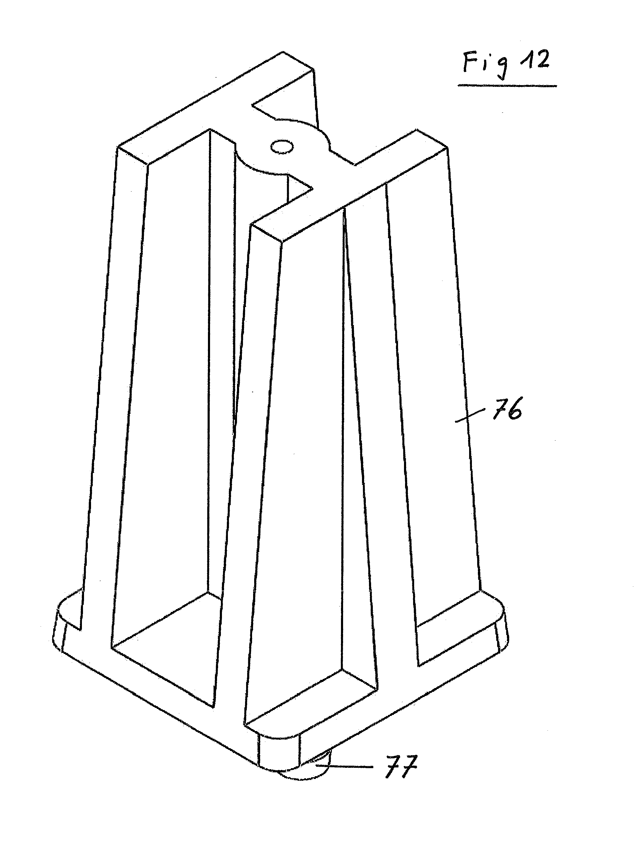

Im Behältnisboden 4 weiter erkennbar sind Lochungen oder Aufnahmelöcher 36, auf deren Funktion später unter Bezug auf Figur 12 eingegangen wird.

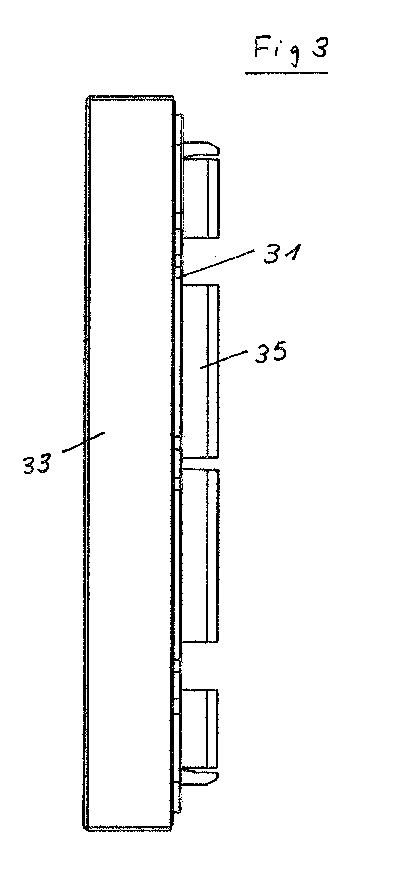

Figur 3 zeigt in Seitenansicht ein Deckelelement 31, mit im Randbereich nach unten ragenden kragenartigen Montagelemente 35, welche ein einschnappendes oder einrastendes Aufsetzen des Deckels auf den Behältniswandungen ermöglicht. In der Darstellung gemäss Figur 3 weist der Deckel einen nach oben ragenden kragenartigen Rand 33 auf.

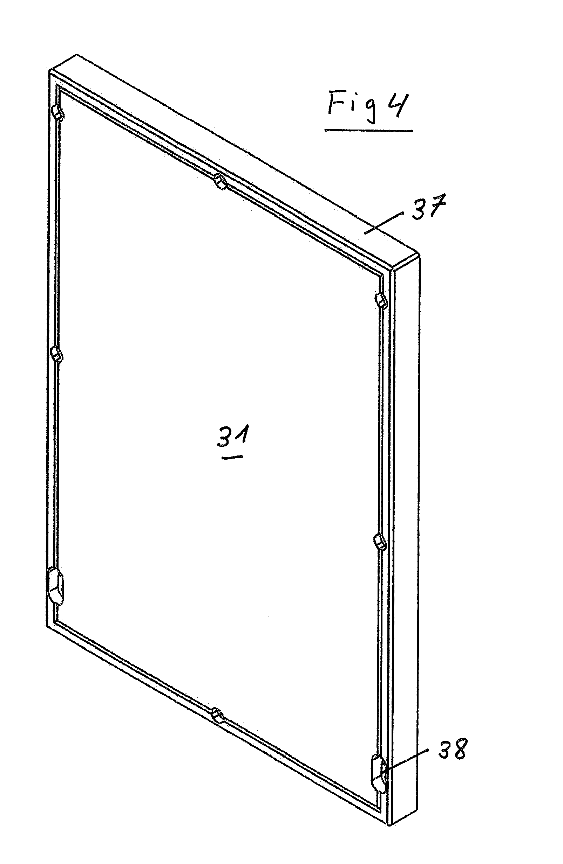

Dem gegenüber zeigt Figur 4 in Perspektive eine weitere Ausführungsvariante eines Deckels 31, welcher keinen kragenartigen Rand aufweist, sondern lediglich eine umlaufende Seitenwandung 37.

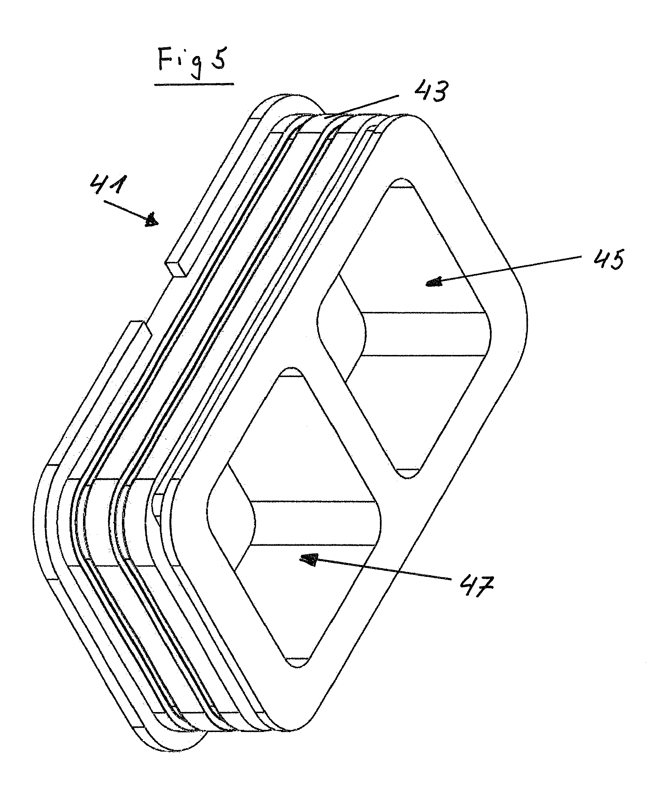

Figur 5 zeigt in Perspektive ein Einsatzelement 41, welches vorgesehen ist um in eine Öffnung 7 oder 9 in einer Seitenwandung eingesteckt zu werden. Dieses Einsatzelement 41 weist einerseits dichtende Randpartien 43 auf, welche beispielsweise aus einem elastomeren oder gummiartigen Polymermaterial bestehen um ein dichtendes Einsetzen in die Öffnung 7 bzw. 9, insbesondere zweier aneinanderstossender Behältnisse, zu ermöglichen. Das Einsatzelement 41 weist zwei Durchgänge 45 und 47 auf, um beispielsweise die Trennung zwischen Niedervolt- und Starkstromkomponenten oder Leitungen zu ermöglichen.

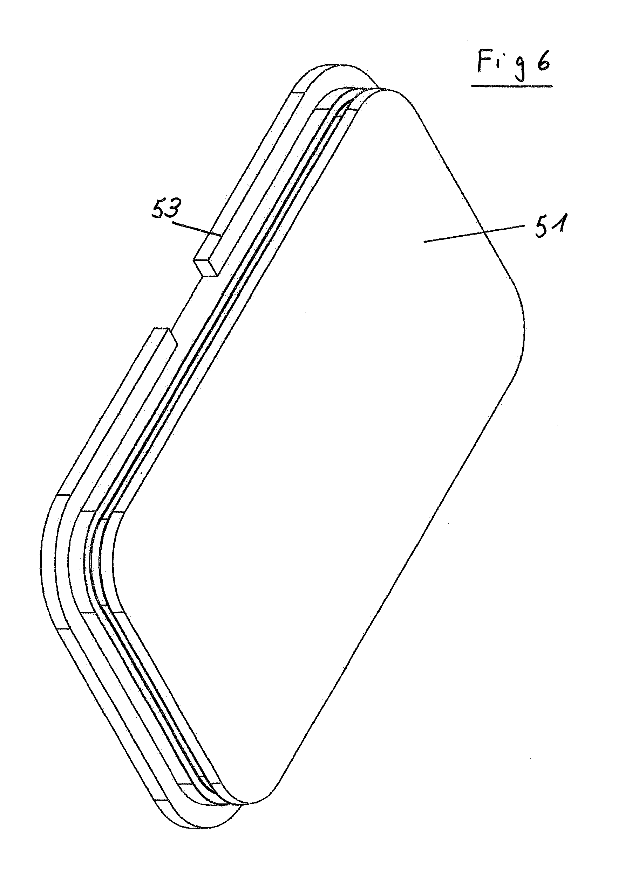

Figur 6 zeigt demgegenüber ein Verschlusselement 51, um eine Seitenöffnung zu verschliessen, wobei die seitlich vorstehende Randpartie 53 in den Nuten bzw. Führungen 21 und 23 wie dargestellt in Figur 1 eingeführt werden kann.

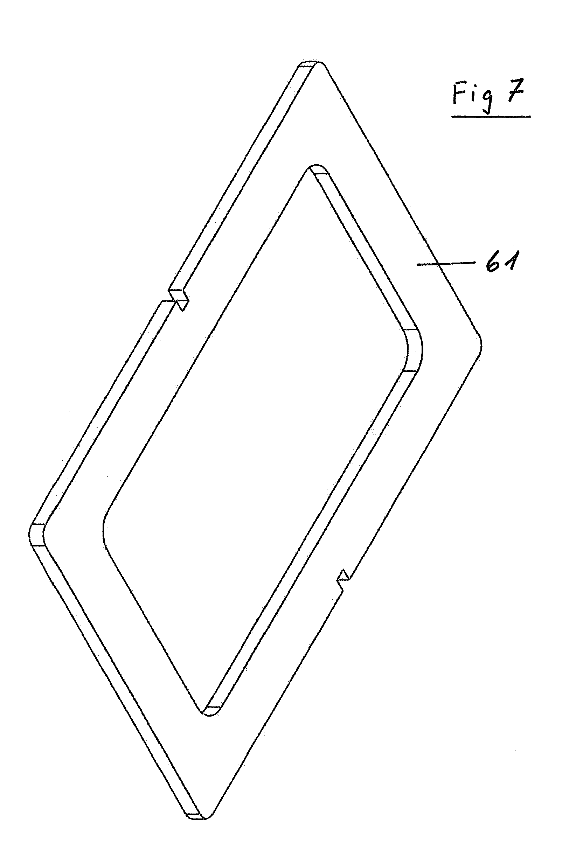

Figur 7 zeigt ein Trenn- oder Verstärkungselement 61, welches in die Rinne 25, wie dargestellt in Figur 2 eingesetzt werden kann.

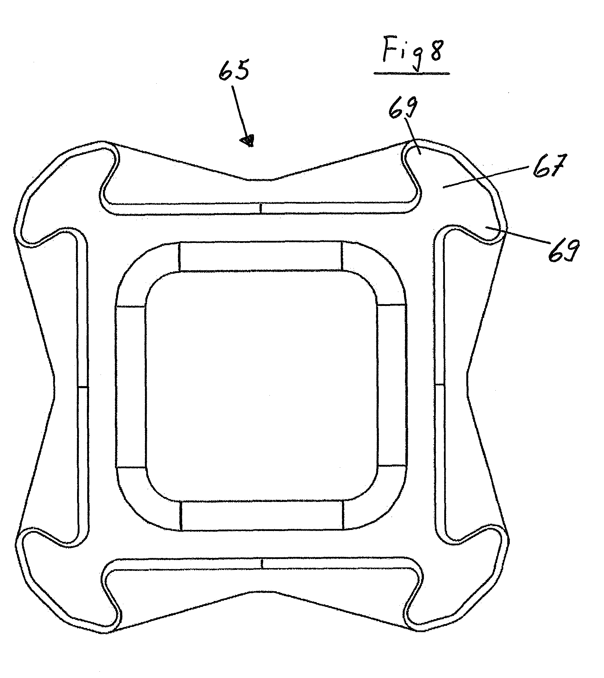

Figur 8 zeigt ein Halteelement 65, welches vorgesehen ist um mindestens zwei oder mehrere Behältnisse miteinander fest zusammenzuhalten. Das Halteelement 65, wie dargestellt in Figur 8 ist vorgesehen für das Zusammenhalten vier in einer Ecke zusammenstossender Behältnisse, wobei es selbstverständlich möglich ist, dieses Element nur hälftig auszubilden, beispielsweise um nur zwei Behältnisse miteinander zu verbinden. Die je in den Eckbereichen vorstehenden Vorsprünge 67 mit seitlichen Auskragungen 69 werden je in eine Aussparung und Führungen 15 eingeführt, wie in den Figuren 1 und 2 erkennbar.

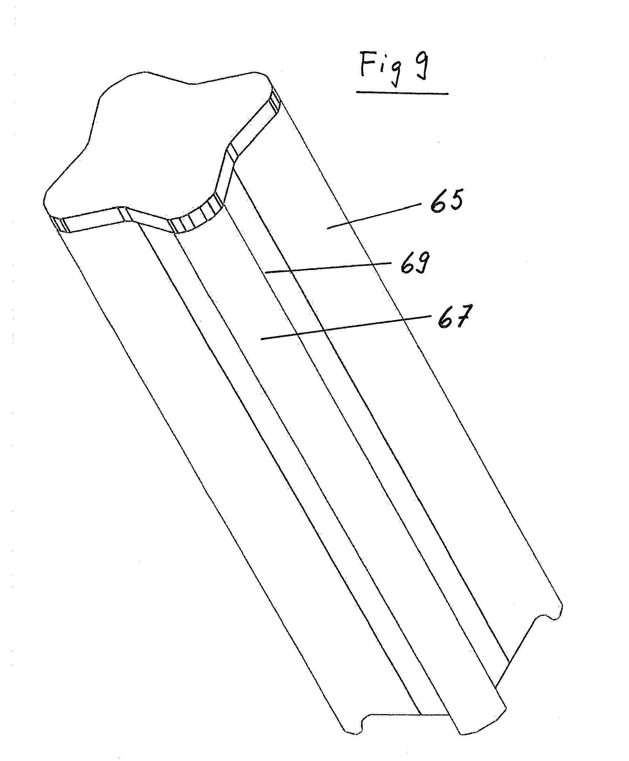

Figur 9 zeigt das Halteelement 65 in Perspektive.

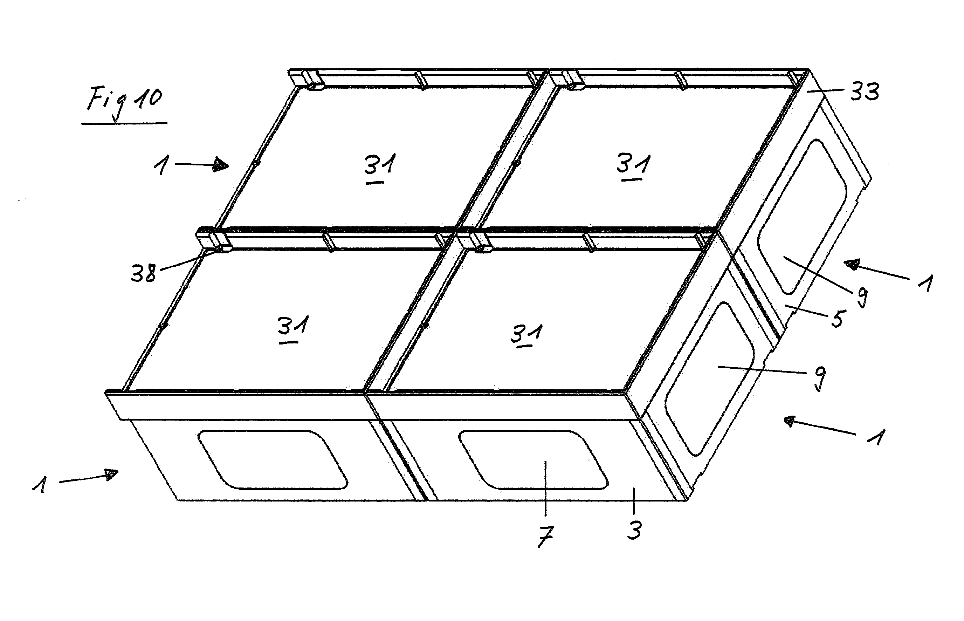

Figur 10 zeigt nun wie vier erfindungsgemässe Behältnisse 1 aneinandergefügt sind. Dabei ist es nun in Folge der erfindungsgemässen Ausbildung der Behältnisse insbesondere mit den Öffnungen in den Seitenwandungen möglich, Verbindungen zwischen den Behältnissen herzustellen, so dass die Stromverteilung nicht ausserhalb der Behältnisse erfolgen muss. Somit können geschützt von der Umgebung verschiedene elektrische bez. elektronische Komponenten miteinander verbunden werden. Selbstverständlich ist es möglich, zusätzliche Behältnisse anschliessend an die Seitenwandungen mit den vier dargestellten Behältnissen zu kombinieren. Es ist aber auch möglich, die seitlichen Öffnungen 7 bzw. 9 mittels je einem Verschlusselement 51 wie dargestellt in Figur 6 zu verschliessen.

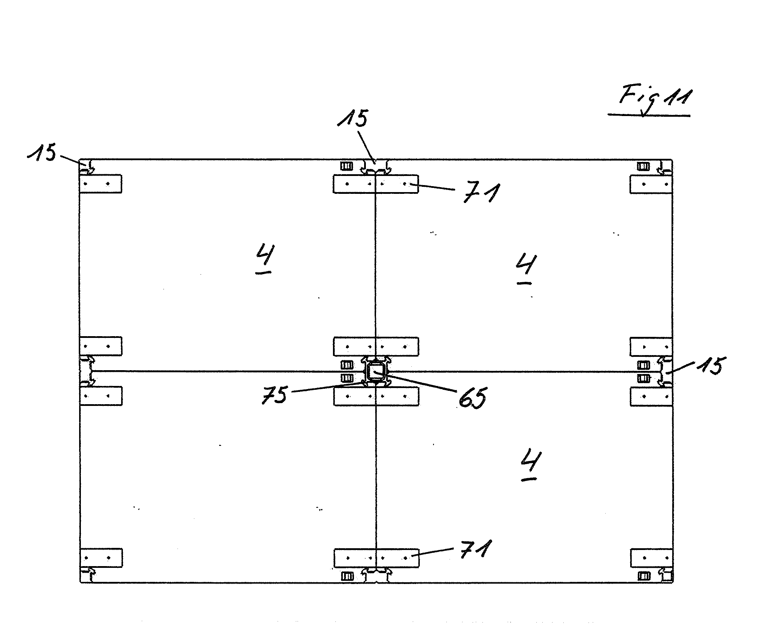

Figur 11 zeigt in Ansicht von unten, wie die vier Behältnisse mittels einem Halteelement 65 zusammengehalten werden. Dieses wird von der Bodenseite in die durch die vier Aussparungen gebildete Aufnahme 75 eingesteckt und durch das Einführen je des Vorsprunges 67 in die jeweiligen Führungen der Aussparungen 15 werden die vier Behältnisse fest miteinander verbunden. Wie weiter in Figur 11 erkennbar, ist es möglich in den jeweiligen Behältnisböden 4 Vertiefungen 71 anzuordnen, um die Behältnisse auf entsprechende Montageschienen beispielsweise an einer Raumwandung oder einer anderen Unterlage zu befestigen.

Figur 12 zeigt in Perspektive eine Befestigungseinheit 76, welche vorgesehen ist bspw. auf dem Behältnisboden 4 "stehend" angeordnet zu werden. Dabei wird bspw. ein unten vorstehender Vorsprung 77 in die dafür vorgesehene Lochung oder Aufnahme 36 im Behältnisboden eingesteckt. Gemäss dem Ausführungsbeispiel, dargestellt in Figur 2, können 6 derartige Befestigungseinheiten 76 angeordnet werden, zum Befestigen bspw. sogenannter DIN45 Hutschienen. Pro DIN45 werden zwei der erwähnten Teile 76 in dem Unterboden 4 gesteckt und zusätzlich mit einer Schraube befestigt. Auf derartige Hutschienen können anschliessend irgendwelche Module aufgeschnappt oder aufgeschraubt werden. Da es möglich ist, dass derartige Module oder DIN45 Komponenten über den Deckel herausragen, muss der Deckel entsprechend ausgeschnitten werden. Zur Abdeckung der aus dem Deckel herausragenden Schallteile oder DIN45 Komponenten, kann bspw. ein Gummideckel aufgeschraubt werden, damit der sogenannte IP Schutz eingehalten werden kann.

Figur 13 schliesslich zeigt eine scharnierartige Halterung 81 mit Endhaken 83. Diese scharnierartige Halterung ist vorgesehen, um in der Behältniswandung durch die jeweilige Öffnung 32 in die schachtartige Aufnahme 42 eingeführt zu werden. Dabei wird die scharnierartige Halterung 81 durch eine dafür vorgesehene entsprechende schlitzartige Öffnung in einer Auskerbung 38 im Deckel 31 hindurchgeführt, wobei das Halteteil 85 der scharnierartige Halterung 81 in der Auskerbung 38 zurückgehalten wird. Die Lochung 87 im Halteteil 85 ist vorgesehen, für das Anordnen und Befestigen der Halterung im Behältnis mittels einer Schraube. Bei Montage-, Revisions- oder Installationsarbeiten, bei welchen der Deckel 31 vom Behältnis entfernt werden muss, wird bspw. die Schraube durch die Öffnung 87 gelockert und der Deckel mit der scharnierartigen Halterung 81 aus der schachtartigen Aufnahme 42 abgehoben, wobei aber ein vollständiges Entfernen infolge des Endhakens 83 verunmöglicht wird. Damit ist sichergestellt, dass irgendwelche Verdrahtungen zwischen Deckel und Behältnisinnerem infolge Zurückhaltens durch den Endhaken 83 bestehen bleiben und ein Durchhängen der Drahte sowie ein Herunterfallen des Deckels verhindert wird.

Die unter Bezug auf die Figuren 1 bis 13 dargestellten Ausführungsbeispiele dienen dazu, die vorliegende Erfindung zu erläutern. Selbstverständlich ist die Erfindung keinesfalls auf die dargestellten Beispiele beschränkt und es ist möglich, die dargestellten Behältnisse bzw. Einzelteile zu modifizieren, anders auszugestalten oder mit weiteren Elementen zu ergänzen. Auch die für die verschiedenen Elemente verwendeten Materialien sind nicht primär Gegenstand der vorliegenden Erfindung. Sämtliche für elektronische und elektrische Baugruppen, Verteilerdosen, etc. geeignete Materialien wie insbesondere entsprechend Polymere können für die Herstellung der erfindungsgemäss beschriebenen Behältnisse verwendet werden.

## Patentansprüche

1. Vorrichtung zum Anordnen und/oder Lagern von elektrischen oder elektronischen Komponenten und/oder für die Stromverteilung aufweisend mindestens ein gehäuseartiges Behältnis (1) mit Deckel (31), mit vier weitgehendst senkrecht zueinander angeordneten Seitenwandungen (3,5) sowie einen Behältnisboden (4), **dadurch gekennzeichnet, dass** das oder die Behältnisse an mindestens einer Seitenwandung und/oder in Eckbereichen derart ausgebildet sind, dass mindestens zwei Behältnisse aneinander steckbar oder einrastbar fest miteinander verbindbar sind und dass mindestens in einigen der je vier Seitenwandungen (3,5) Öffnungen (7,9) vorgesehen sind, derart, dass in den aneinanderstossenden Seitenwandungen von je zwei Behältnissen die Öffnungen weitgehendst deckungsgleich sind und dichtend aneinander stossen.

2. Vorrichtung nach Anspruch 1, **dadurch gekennzeichnet, dass** in mindestens einer Öffnung, vorzugsweise zwei aneinanderliegenden Öffnungen zweier Behältnisse ein Einsatzelement (41), die Öffnungen vollständig und dichtend ausfüllend einsetzbar ist, aufweisend mehrere voneinander getrennte Durchgänge (45,47), welche individuell verschliessbar sind.

3. Vorrichtung nach Anspruch 1 oder 2, **dadurch gekennzeichnet, dass** im Behältnisboden Bereiche (13) vorgesehen sind, welche eine geringere Wandstärke aufweisen als der übrige Behältnisboden und welche herausnehmbar sind zur Bildung je einer Öffnung.

4. Vorrichtung nach einem der Ansprüche 1 bis 3, **dadurch gekennzeichnet, dass** je in den Ecken der vier Seitenwandungen Aussparungen (15) mit Führungen vorgesehen sind, um beim Aneinanderstossen mindestens zweier Behältnisse entlang einer Seitenwandung diese mittels einem in die Aussparung einsetzbaren bzw. steckbaren Halteelement (65) fest miteinander zu verbinden.

5. Vorrichtung nach einem der Ansprüche 1 bis 4, **dadurch gekennzeichnet, dass** je am Deckelrand gegen das Innere des Behältnisses ragende Montageabschnitte (35) vorgesehen sind, damit der Deckel (31) rastend oder einschnappend auf den Wandungen aufsetzbar ist.

6. Vorrichtung nach einem der Ansprüche 1 bis 5, **dadurch gekennzeichnet, dass** am Behältnisdeckel Dichtungsorgane vorgesehen sind, um ein dichtes Aufsetzen und Verbinden des Deckels mit den Wandungen sicherzustellen.

7. Vorrichtung nach einem der Ansprüche 1 bis 6, **dadurch gekennzeichnet, dass** am Behältnisdeckel in etwa in Verlängerung der Seitenwandungen des Behältnisses nach oben ragende kragenartige Abschnitte vorgesehen sind.

8. Vorrichtung nach einem der Ansprüche 1 bis 7, **dadurch gekennzeichnet, dass** mindestens ein Teil der Öffnungen in den Seitenwandungen verschliessbar sind.

9. Vorrichtung nach einem der Ansprüche 1 bis 8, **dadurch gekennzeichnet, dass** Führungsorgane, Halteabschnitte und/oder Steckhilfen im Innern des Behältnisses vorgesehen sind um das Einsetzen von mindestens einer Trennwand (61), gegebenenfalls mit einem oder mehrer Durchgängen, einer Verstärkungsrippe oder von Befestigungseinheiten, (76) zu ermöglichen.

10. Vorrichtung nach einem der Ansprüche 4 bis 9, **dadurch gekennzeichnet, dass** die Halteelemente zum Verbinden mindestens zweier Behältnisse von der Bodenseite des Behältnisses im jeweiligen Eckbereich einsetzbar bzw. einsteckbar sind um beispielsweise zwei bis vier Behältnisse miteinander zu verbinden.

11. Vorrichtung nach einem der Ansprüche 1 bis 10, **dadurch gekennzeichnet, dass** mindestens eine in eine Behältniswandung einführbare scharnierartige Halterung (81) vorgesehen ist, aufweisend ein Rückhalteelement wie bspw. einen Endhaken (83) um ein vollständiges Herausziehen der Halterung aus der Behältniswandung zu verhindern, welche Halterung am entgegengesetzten Ende zum Rückhalteelement einen Halteabschnitt (85) aufweist, um im Deckelrand angeordnet zu werden, um bei Installations- oder Montagearbeiten ein vollständiges Entfernen oder Herunterfallen des Deckels vom Behältnis zu verhindern.

12. Installations-Verteilerdoseanordnung mit einer Vorrichtung nach einem der Ansprüche 1 bis 10, vorzugsweise mindestens zweier Vorrichtungen nach einem der Ansprüche 1 bis 10.
